# EUROPÄISCHE PATENTANMELDUNG

(11) **EP 3 614 537 A1**
(43) Veröffentlichungstag der Anmeldung: **26.02.2020**
(21) Anmeldenummer: 19191106.4
(22) Anmeldetag: 09.08.2019
(51) Int. Cl.: H02K 5/20, H02K 15/12, H02K 15/14, H02K 5/08, H02K 9/19, H02K 9/22, H02K 5/173

(54) **VERFAHREN ZUM HERSTELLEN EINER ELEKTRISCHEN MASCHINE**

(30) Priorität: 23.08.2018 DE 102018214282
(71) Anmelder: Mahle International GmbH, 70376 Stuttgart (DE)
(72) Erfinder: ESTEVES ALBIERI, Gustavo, 71334 Waiblingen (DE); FRITSCH, Karl-Martin, 70180 Stuttgart (DE); GRELLE, Thorsten, 70619 Stuttgart (DE); SCHMÜLLING, Dr., Christoph, 71397 Leutenbach (DE)
(74) Vertreter: BRP Renaud & Partner mbB Rechtsanwälte Patentanwälte Steuerberater

(57) **Zusammenfassung**

Die vorliegende Erfindung betrifft ein Verfahren zum Herstellen einer elektrischen Maschine (1), die einen Rotor (4) sowie einen Stator (3) mit einem stirnseitig abstehenden Wickelkopf (10) aufweist. Eine vereinfachte Herstellung sowie eine Effizienzsteigerung der elektrischen Maschine (1) werden dadurch erreicht, dass der Wickelkopf (10) in einer Gussform zum Herstellen eines Kühlmoduls (5) angeordnet und in die Gussform ein das Kühlmodul (5) ausbildendes Gussmaterial derart eingebracht wird, dass das Gussmaterial den Wickelkopf (10) umschließt.

Die Erfindung betrifft des Weiteren eine derartig hergestellte elektrische Maschine (1).

## Beschreibung

Die vorliegende Erfindung betrifft ein Verfahren zum Herstellen einer elektrischen Maschine. Die Erfindung betrifft des Weiteren eine derartig hergestellte elektrische Maschine.

Elektrische Maschinen, insbesondere Elektromotoren, weisen in der Regel einen Stator mit im Betrieb stromdurchflossenen Wicklungen auf, der einen stirnseitig abstehenden Wickelkopf aufweist. Die Maschine weist zudem einen Rotor auf, der üblicherweise vom Stator umschlossen ist und mit Hilfe des Stators in Rotation versetzt wird. Solche elektrische Maschinen weisen gewöhnlich ein Gehäuse auf, in dem der Stator und der Rotor aufgenommen sind. Bekannt ist es, den Stator passgenau in das Gehäuse einzupressen. Im Betrieb derartiger Maschinen entsteht Wärme, die eine Leistungsbegrenzung der Maschine darstellt und/oder zur Beschädigungen der elektrischen Maschine führen kann. Es ist daher wünschenswert, derartige Maschinen zu kühlen, um besagte Beschädigungen zu vermeiden und/oder die Effizienz der elektrischen Maschine zu erhöhen.

Das von der elektrischen Maschine erzeugte Moment wird gewöhnlich über den Rotor übertragen, der innerhalb der elektrischen Maschine gelagert ist. Dabei ist es wichtig, die Ausrichtung des Rotors relativ zum Stator möglichst genau einzustellen. Wird der Stator in das Gehäuse eingepresst, fordert die genaue relative Ausrichtung des Stators zum Rotor enge Toleranzen des Statoraußendurchmessers, des Gehäuseinnendurchmessers sowie eines Lagerflansches, in dem ein Lager zum Lagern des Rotors aufgenommen ist und der am Gehäuse fixiert ist und dieses insbesondere stirnseitig verschließt. Dies führt zu hohen Herstellungskosten der elektrischen Maschine. Weist das Gehäuse zudem Kühlfluid führende Kanäle auf, um die elektrische Maschine zu kühlen, führt dies, insbesondere auch durch die eng einzuhaltenden Toleranzen, zu weiteren Kostensteigerungen der Herstellung der elektrischen Maschine.

Aus der EP 1 587 204 A2 ist es bekannt, den Lagerflansch einer elektrischen Maschine über den Stator zu lagern. Somit können das Gehäuse und der Stator mit höheren Toleranzen hergestellt und die Herstellungskosten somit reduziert werden.

Aus der EP 1 199 787 A1 ist es bekannt, eine elektrische Maschine über den Wickelkopf zu kühlen.

Die vorliegende Erfindung beschäftigt sich mit der Aufgabe, für ein Verfahren zum Herstellen einer elektrischen Maschine der eingangs genannten Art sowie für eine solche elektrische Maschine verbesserte oder zumindest andere Ausführungsformen anzugeben, die sich insbesondere durch eine kostengünstige Herstellung und/oder eine Effizienzsteigerung der elektrischen Maschine auszeichnen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine elektrische Maschine mit einem Kühlmodul zu versehen, das dem Kühlen der elektrischen Maschine dient, und das Kühlmodul um einen Wickelkopf eines Stators der elektrischen Maschine zu gießen. In der Folge erhöht sich die wärmeübertragende Fläche zwischen dem Wickelkopf und dem Kühlmodul, so dass eine effizientere Kühlung und somit eine Effizienzsteigerung der elektrischen Maschine erfolgt. Zudem kann hierdurch eine Relativpositionierung des Kühlmoduls zum Stator realisiert werden, so dass weitere mechanische Verbindungen zwischen dem Stator und dem Kühlmodul entfallen können. Insgesamt lässt sich die elektrische Maschine hierdurch kostengünstiger herstellen. Zudem weist die elektrische Maschine durch die verbesserte Kühlung eine erhöhte Effizienz auf.

Dem Erfindungsgedanken entsprechend weist die elektrische Maschine den Stator auf, der den stirnseitig abstehenden Wickel kopf aufweist. Der Stator umfasst insbesondere Wicklungen, die sich im Wickelkopf fortsetzen. Die elektrische Maschine weist zudem einen Rotor auf, der im Betrieb vom Stator angetrieben ist.. Das Kühlmodul der elektrischen Maschine ist im Betrieb durch die Strömung eines Kühlfluids gekühlt und kühlt somit über den Wickelkopf die elektrische Maschine. Zum Herstellen der elektrischen Maschine wird der Stator mit dem Wickelkopf in einer Gussform angeordnet, mit der das Kühlmodul hergestellt wird. Zudem, insbesondere anschließend, wird ein Gussmaterial in die Gussform eingebracht, welches anschließend das Kühlmodul ausbildet. Insbesondere wird die Gussform mit dem Gussmaterial gefüllt. Das Einbringen des Gussmaterials in die Gussform erfolgt derart, dass das Gussmaterial und somit anschließend das Kühlmodul den Wickelkopf umschließt. Danach wird das somit hergestellte Kühlmodul, das heißt insbesondere nach dem Aushärten des Gussmaterials, zusammen mit dem Stator aus der Gussform entfernt. Insbesondere schließt das Kühlmodul stirnseitig am Stator an.

Der Rotor kann prinzipiell beliebig ausgestaltet sein. Vorstellbar ist ein permanentmagnetischer Rotor. Denkbar sind auch Ausgestaltungen der elektrischen Maschine als Asynchronmaschine oder als Transversalflussmaschine.

Das Gussmaterial ist zweckmäßig elektrisch isolierend. Vorteilhaft kommt als Gussmaterial ein Kunststoff zum Einsatz.

Besonders bevorzugt erfolgt das Einbringen des Gussmaterials in die Gussform derart, dass das Gussmaterial den Wickelkopf, insbesondere die Hohlräume zwischen Wickelungen des Wickelkopfs, füllt. Hierdurch erfolgt eine weitere Vergrößerung der wärmeübertragenden Fläche zwischen dem Wickelkopf und dem Kühlmodul und in der Folge eine verbesserte Kühlung des Wickelkopfs und somit der elektrischen Maschine über das Kühlmodul.

Vorteilhaft ist es, wenn die Gussform für den Wickelkopf eine zugehörige Aufnahme aufweist. Hierdurch kann eine genauere Relativpositionierung des Stators zum Kühlmodul erzielt werden und/oder die Herstellung des Kühlmoduls und somit der elektrischen Maschine vereinfacht werden.

Vorteilhaft sind Ausführungsformen, bei denen in der Gussform ein Unterdruck erzeugt und das Gussmaterial in die Gussform eingebracht wird. Somit werden Lufteinschlüsse im Gussmaterial verhindert oder zumindest verringert, so dass auch das Kühlmodul keine oder zumindest reduzierte Lufteinschlüsse aufweist. Als Resultat erfolgt innerhalb des Kühlmoduls ein verbesserter Wärmetransport, so dass der Wickelkopf und somit die elektrische Maschine verbessert gekühlt wird. Dabei ist es insbesondere vorstellbar, in der Gussform ein Vakuum zu erzeugen und anschließend das Gussmaterial in die Gussform einzubringen.

Das Eindringen des Gussmaterials in die Gussform kann auf beliebige Weise erfolgen. Insbesondere wird das Gussmaterial in die Gussform gegossen, beispielsweise spritzgegossen.

Bei vorteilhaften Ausführungsformen ist die Gussform derart ausgebildet, dass das mit der Gussform hergestellte Kühlmodul auf der vom Wickelkopf abgewandten Seite einen stirnseitig offenen Kanalabschnitt oder eine Vertiefung aufweist. Die elektrische Maschine weist dabei eine Abdeckung auf, welche den Kanalabschnitt bzw. die Vertiefung verschließt und somit zusammen mit dem Kanalabschnitt einen Kanal bildet, der im Betrieb vom Kühlfluid durchströmt ist. Somit kann die Strömung des die elektrische Maschine kühlenden Kühlfluids, beispielsweise einer Kühlflüssigkeit, insbesondere von Kühlwasser, stirnseitig der elektrischen Maschine über das Kühlmodul und die Abdeckung erfolgen.

Bevorzugt weist die Abdeckung zur Versorgung des Kanals mit dem Kühlfluid, das heißt zur Zuführung und/oder zur Abführung des Kühlfluids, wenigstens einen Stutzen auf. Somit sind keine weiteren Bestandteile zur fluidischen Versorgung der elektrischen Maschine mit dem Kühlfluid notwendig.

Eine kostengünstige und vereinfachte Herstellung der elektrischen Maschine ergibt sich dadurch, dass die Abdeckung durch ein Spritzverfahren, insbesondere durch ein Spritzgussverfahren, vorteilhaft aus Kunststoff, hergestellt wird. Die Herstellung der Abdeckung erfolgt dabei zweckmäßig separat von der Herstellung des Kühlmoduls.

Besonders bevorzugt sind Ausführungsformen, bei denen auch eine Lagerung des Rotors der elektrischen Maschine am Kühlmodul realisiert wird. Das Kühlmodul dient also einerseits der Lagerung des Rotors und andererseits der Kühlung der elektrischen Maschine. Durch die Lagerung des Rotors ist zudem durch das Kühlmodul auch eine Relativpositionierung des Stators zum Rotor vorgegeben.

Vorteilhaft ist die Gussform derart ausgebildet, dass das mit der Gussform hergestellte Kühlmodul eine Lageraufnahme zum Aufnehmen eines Lagers zur Lagerung des Rotors aufweist. Vorstellbar ist es dabei, das Lager nach dem Herstellen des Kühlmoduls in das Kühlmodul einzusetzen. Denkbar sind Ausführungsformen, bei denen das Lager als ein Einlegeteil, insbesondere zusammen mit dem Rotor und/oder einer drehfest mit dem Rotor verbundenen Welle, in die Gussform eingelegt wird, bevor das Gussmaterial in die Gussform eingebracht wird.

Nach dem Herstellen des Kühlmoduls kann dieses zusammen mit dem Stator als eine Baueinheit, die zudem den Rotor und/oder die Welle umfasst, in einem Gehäuse der elektrischen Maschine angeordnet werden, wobei eine Relativpositionierung des Stators zum Rotor über das Gehäuse entfällt.

Es versteht sich, dass der Stator an beiden Stirnseiten jeweils einen Wickelkopf aufweisen kann, wobei am jeweiligen Wickelkopf ein solches Kühlmodul hergestellt/oder ausgebildet sein kann.

Es versteht sich ferner, dass neben dem Verfahren zum Herstellen der elektrischen Maschine auch eine derartig hergestellte elektrische Maschine, insbesondere Elektromotor, zum Umfang dieser Erfindung gehört.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: einen Längsschnitt durch eine elektrische Maschine,
- Fig. 2: eine isometrische Ansicht der elektrischen Maschine.

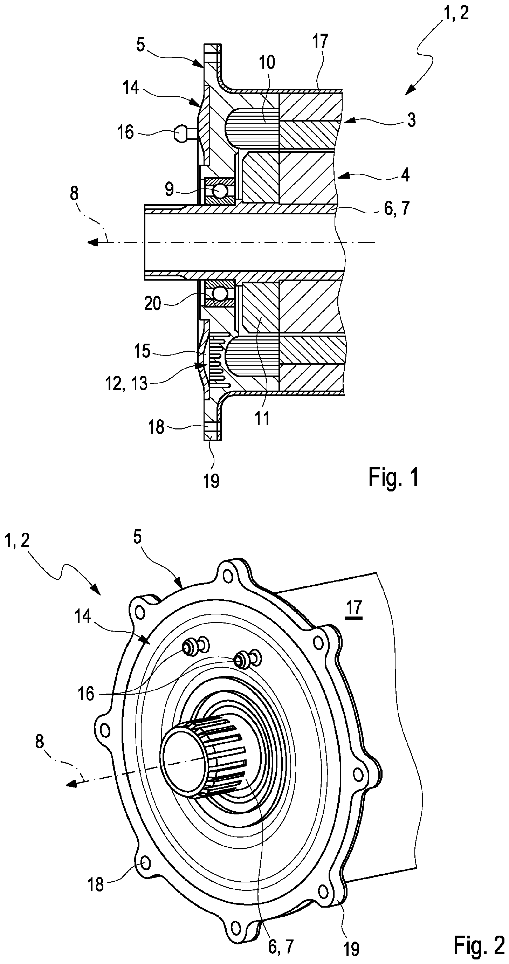

Eine elektrische Maschine 1, insbesondere ein Elektromotor 2, wie sie in den Figuren 1 und 2 gezeigt ist, weist einen Stator 3 sowie einen Rotor 4 auf. Dabei ist in Figur 1 ein Längsschnitt durch die Maschine 1 im Bereich eines stirnseitigen Kühlmoduls 5 und in Figur 2 eine isometrische Ansicht dieses Bereichs gezeigt. Der Stator 3 weist eine nicht gezeigte Wicklung auf, die im Betrieb von einem elektrischen Strom durchströmt ist und somit den Rotor 4, der zumindest teilweise paramagnetisch ausgebildet ist, antreibt. Der Rotor 4 ist drehfest mit einer Welle 6 verbunden oder einstückig mit der Welle 6 hergestellt, die im gezeigten Beispiel als eine Hohlwelle 7 ausgebildet ist. Der Rotor 4 und die Welle 6 sind um eine Drehachse 8 drehbar gelagert, wobei die Welle 6 und der Rotor 4 koaxial zur Drehachse 8 angeordnet sind. Der Stator 3 umgibt den Rotor 4 und ist koaxial zum Rotor 4 angeordnet. Die Lagerung des Rotors 4 und der Welle 6 erfolgt über ein Lager 9, welches die Welle 6 aufnimmt. Der Stator 3 weist einen stirnseitig abstehenden Wickelkopf 10 auf, der außenseitig vom Kühlmodul 5 in Umfangsrichtung gänzlich umschlossen ist, wobei die Umfangsrichtung bezüglich der Rotationsachse 8 zu verstehen ist. Das Kühlmodul 5 schließt somit stirnseitig am Stator 3 und am Wickelkopf 10 an. Radial innenseitig des Wickelkopfs 10 und axial zwischen dem Rotor 4 und dem Kühlmodul 5 ist ein Wuchtschild 11 angeordnet. Das Lager 9 ist in einer Lageraufnahme 20 des Kühlmoduls 5 im Kühlmodul 5 aufgenommen, so dass das Kühlmodul 5 zum Lagern der Welle 6 und somit des Rotors 4 über das Lager 9 zum Einsatz kommt. Das Kühlmodul 5 dient zudem der Kühlung der elektrischen Maschine 1. Im gezeigten Beispiel weist das Kühlmodul hierzu auf der vom Stator 3 abgewandten Seite einen stirnseitig nach außen offenen, sich in Umfangsrichtung erstreckenden Kanalabschnitt 12 auf, die somit als eine axial offene Vertiefung 13 ausgebildet ist. Auf der vom Stator 3 abgewandten Seite des Kühlmoduls 5 ist eine Abdeckung 14 am Kühlmodul 5 angebracht, die den Kanalabschnitt 12 bzw. die Vertiefung 13 axial verschließt und somit mit dem Kühlmodul 5 einen Kanal 15 bildet, der im Betrieb von einem Kühlfluid, beispielsweise einer Kühlflüssigkeit, durchströmt ist, um über das Kühlmodul 5 den Wickelkopf 10 und somit die elektrische Maschine 1 zu kühlen. An der Abdeckung 14 sind zwei Stutzen 16 integral ausgeformt, mit denen eine Versorgung des Kanals15 mit dem Kühlfluid, das heißt eine Zuführung und eine Abführung des Kühlfluids, erfolgt. Der Stator 3, der Rotor 4 sowie die Welle 6 sind in einem Gehäuse 17 der elektrischen Maschine 1 angeordnet. Das Kühlmodul 5 weist radial abstehende Verbindungsabschnitte 18 in der Art eines Flansches 19 auf, über welche das Kühlmodul 5 und somit der Stator 3, der Rotor 4 und die Welle 6 am Gehäuse 17 befestigt sind.

Zum Herstellen der elektrischen Maschine 1 kommt eine nicht gezeigte Gussform zum Einsatz, in welcher der Wickelkopf 10 des Stators 3 angeordnet wird. Mit der Gussform wird das Kühlmodul 5 hergestellt. Dabei können der Stator 3, der Rotor 4, die Welle 6 und das Lager 9 vorgefertigt und anschließend derart bezüglich der Gussform angeordnet werden, dass sich nach dem Herstellen des Kühlmoduls 5 die gezeigte Relativpositionierung zum Kühlmodul 5 und zueinander ergibt. Zum Herstellen des Kühlmoduls 5 wird anschließend ein das Kühlmodul 5 ausbildendes Gussmaterial in die Gussform eingebracht, insbesondere gegossen und/oder spritzgegossen, während in der Gussform ein Unterdruck, insbesondere ein Vakuum, erzeugt wird. Das Einbringen des Gussmaterials erfolgt derart, dass das Gussmaterial den Wickelkopf 10 umgibt und insbesondere Hohlräume zwischen nicht gezeigten Wicklungen des Wickelkopfs füllt. Anschließend härtet das Gussmaterial aus, so dass das Kühlmodul 5 hergestellt ist. Das Kühlmodul 5 ist somit mit einer vergrößerten wärmeübertragenden Fläche mit dem Wickelkopf 10 verbunden, so dass der Wickelkopf 10 und somit auch der Stator 3 verbessert gekühlt werden. Das Gussmaterial umgibt zudem das Lager 9 und bildet die Lageraufnahme 20 aus, so dass mit dem Kühlmodul 5 zudem eine Relativpositionierung des Rotors 4 bzw. der Welle 6 zum Stator 3 erfolgt. Die Gussform kann ferner zum Ausnehmen des Lagers 9 und/oder des Wickelkopfs 10 entsprechende Aufnahmen aufweisen. Zudem ist die Gussform derart ausgebildet, dass das Kühlmodul 5 den Kanalabschnitt 12 bzw. die Vertiefung 13 aufweist. Nach dem Herstellen des Kühlmoduls, insbesondere nach dem Aushärten des Gussmaterials, wird die Baueinheit aus Kühlmodul 5, Stator 3, Rotor 5, Welle 6, Lager 9 und gegebenenfalls Wuchtschild 11 aus der Gussform entfernt und in das Gehäuse 17 eingeschoben und über die Verbindungsabschnitte 18 des Kühlmoduls 5 am Gehäuse 17 befestigt. Das Anbringen der Abdeckung 14 am Kühlmodul 5 kann vor oder nach diesem Einschieben erfolgen.

Die Abdeckung 14 ist vorteilhaft als ein Spritzgussteil, beispielsweise aus Kunststoff, hergestellt, wobei die Stutzen 16 im Gussverfahren und somit integral mit der Abdeckung 14 ausgebildet werden.

## Patentansprüche

1. Verfahren zum Herstellen einer elektrischen Maschine (1), die aufweist:
- einen Stator (3) mit einem stirnseitig abstehenden Wickelkopf (10), sowie
- einen Rotor (4), und
- ein den Wickelkopf (10) umschließendes Kühlmodul (5), das im Betrieb durch die Strömung eines Kühlfluids die elektrische Maschine (1) kühlt,
**dadurch gekennzeichnet,**
- **dass** der Wickelkopf (10) des Stators (3) in einer Gussform zum Herstellen des Kühlmoduls (5) angeordnet wird,
- **dass** in die Gussform zum Herstellen des Kühlmoduls (5) ein das Kühlmodul (5) ausbildendes Gussmaterial eingebracht wird, derart, dass das Gussmaterial den Wickelkopf (10) umschließt,
- **dass** das somit hergestellte Kühlmodul (5) zusammen mit dem Stator (3) aus der Gussform entfernt wird.

2. Verfahren nach Anspruch 1,
**dadurch gekennzeichnet,**
**dass** eine Gussform bereitgestellt wird, die für den Wickelkopf (10) eine zugehörige Aufnahme aufweist.

3. Verfahren nach Anspruch 1 oder 2,
**dadurch gekennzeichnet,**
**dass** in der Gussform ein Unterdruck erzeugt und das Gussmaterial in die Gussform eingebracht wird.

4. Verfahren nach einem der Ansprüche 1 bis 3,
**dadurch gekennzeichnet,**
**dass** das Gussmaterial in die Gussform gegossen wird.

5. Verfahren nach einem der Ansprüche 1 bis 4,
**dadurch gekennzeichnet,**
- **dass** eine Gussform bereitgestellt wird, die derart ausgebildet ist, dass das Kühlmodul (5) auf der vom Wickelkopf (10) abgewandten Seite einen stirnseitig offenen Kanalabschnitt (12) aufweist,
- **dass** der Kanalabschnitt (12) mit einer Abdeckung (14) verschlossen wird, die zusammen mit dem Kanalabschnitt (12) einen vom Kühlfluid durchströmten Kanal (15) bildet.

6. Verfahren nach Anspruch 5,
**dadurch gekennzeichnet,**
**dass** die Abdeckung (14) mit zumindest einem Stutzen (16) zur Versorgung des Kanals (15) mit dem Kühlfluid versehen wird.

7. Verfahren nach Anspruch 5 oder 6,
**dadurch gekennzeichnet,**
**dass** die Abdeckung (14) durch ein Spritzverfahren hergestellt wird.

8. Verfahren nach einem der Ansprüche 1 bis 7,
**dadurch gekennzeichnet,**
**dass** eine Gussform bereitgestellt wird, die derart ausgebildet ist, dass das Kühlmodul (5) eine Lageraufnahme (20) zum Aufnehmen eines Lagers (9) zur Lagerung des Rotors (4) aufweist.

9. Verfahren nach einem der Ansprüche 1 bis 8,
**dadurch gekennzeichnet,**
**dass** der Stator (3) mit dem vom Kühlmodul (5) umschlossenen Wickelkopf (10) in ein Gehäuse (17) der elektrischen Maschine (1) angeordnet wird.

10. Elektrische Maschine (1), insbesondere Elektromotor (2), mit
- einem Stator (3), der einen stirnseitig abstehenden Wickelkopf (10) aufweist,
- einem Rotor (4), der vom Stator (3) umgeben ist,
- einem den Wickelkopf (10) umschließenden Kühlmodul (5), das im Betrieb durch die Strömung eines Kühlfluids die elektrische Maschine (1) kühlt,
wobei die elektrische Maschine (1) gemäß dem Verfahren nach einem der Ansprüche 1 bis 9 hergestellt ist.
